# EUROPEAN PATENT SPECIFICATION

(11) **EP 1 444 024 B1**
(45) Date of publication and mention of the grant of the patent: **22.06.2011**
(21) Application number: 02803002.1
(22) Date of filing: 09.11.2002
(51) Int. Cl.: B01D 29/19

(54) **FILTER MODULE AND METHOD FOR ITS MANUFACTURE**
FILTERMODUL UND VERFAHREN ZU SEINER HERSTELLUNG
MODULE DE FILTRATION ET PROCEDE PERMETTANT DE PRODUIRE CE MODULE

(30) Priority: 13.11.2001 DE 10155591
(43) Date of publication of application: 11.08.2004
(73) Proprietor: PALL CORPORATION, Port Washington, NY 11050 (US)
(72) Inventor: DIEMER, Wolfgang, 73550 Waldstetten (DE); ZEILER, Martin, 73527 Schwäbisch Gmünd (DE)
(74) Representative: Wössner, Gottfried
(86) International application number: PCT/EP2002/012544
(87) International publication number: WO 2003/041829

(56) References cited:
- WO-A-98/35740
- DD-A- 144 207
- FR-A- 873 926
- US-A- 2 339 703
- US-A- 2 561 685
- US-A- 3 592 769

## Description

The invention relates to a filter module and a method for manufacturing a filter module.

WO 98/35740 discloses a filter module in which openings are formed in the filter material whose boundary surfaces constitute the filter surface. The filter module is produced by stacking a plurality of identical disc-shaped filter elements whose openings are substantially arranged atop one another so that channels are formed in the longitudinal direction of the filter module through which the unfiltered material flows into the filter module and from which filtrate flows out of the filter module. The filter elements are arranged in a frame which compresses the discs. For exchanging the filter material, the individual filter discs must be removed and new individual filter discs must be inserted into the frame. The expenditure for exchanging the individual filter discs is very great. When producing the circular discs from sheet-like filter material, a lot of waste is produced.

US patent 2,561,685 discloses a filter element of spirally wound sheet material co-wound with a plurality of strips of filter material which are parallel spaced apart from one another and defining between the convolutions of the spirally wound sheet spiral inlet and outlet channels separated from each other in axial direction of the filter element by said strips. The spirally wound sheet comprises a plurality of inlet openings which register with said inlet channels and outlet channels, respectively. The spirally wound sheet may be made of a filtering material as well, e.g., a fabric of fibrous nature.

The object of the invention is to provide a filter module of the forementioned kind which can be easily exchanged.

Moreover, the object resides in that a method for a simple manufacture of the filter module is to be provided.

This object is solved by a filter module with the features of claim 1 and, with respect to the method, by a method having the features of claim 17.

By winding the filter material to a roll, a compact filter results which, in its entirety, can be inserted with minimal expenditure into a filter housing and can be removed therefrom. The effective filter thickness is independent of the thicknesses of the filter material because flow through the filter material is parallel to its surface. Flow through the filter material takes place from one channel that opens at an outer peripheral surface to a channel that opens at an inner peripheral surface. The opposite flow direction is also possible. By means of the arrangement of the openings, which form the channels, the effective filter thickness can be varied within a broad range without this requiring filter materials with different thicknesses. The diameter of the roll and thus the size of the effective filter surface is determined by the length of the wound web and can thus be varied within a broad range. The axial length of the roll is determined by means of the width of the wound material, wherein, by varying it, the filter surface can be varied also. The filter module can be adjusted in this way with minimal expenditure to very different filtration requirements. The filter material can be, for example, metal, plastic material, or cellulose. Mixtures of these materials can also be advantageous.

As a result of the winding step, the filter material is shape-stable so that in the most favorable case no foreign materials are required; disposal is simplified in this way. The filter module comprises a large integrated filter surface because the filter size in the direction of the longitudinal axis is determined only by the required filter surface and filter thickness and not by additional holding elements. It is possibly to produce filter modules having a very large filter surface and requiring only a small space. The filter module can be inserted into inexpensive compression-proof filter housings so that no complex frame constructions are required. The compact, robust configuration reduces the required expenditure for packaging a filter module and thus lowers the logistic expenses.

The filter material is a depth filter material. In particular, the central channel and the outer peripheral surface are cylindrical. In this way, the filter module can be advantageously employed in a cylindrical housing. However, it can also be advantageous when the central channel and the outer peripheral surface have an elliptical cross-section.

It is provided that the openings are formed as slots. For increasing the stability, it is expedient that the slots are interrupted in the peripheral direction by stays. The flow-through surfaces are arranged, in particular, perpendicularly to the winding axis in a disc shape about the winding axis. However, it may be advantageous to arrange the channels slantedly relative to the winding axis at an angle that is smaller than 90°, In this way, advantages are achieved, in particular, during backwashing. The angle between the winding axis and the channels is advantageously from 30° to 90°. It is provided that in the direction of the winding axis channels are arranged that open alternatingly at the inner peripheral surface and at the outer peripheral surface. In particular, in the radial direction of the filter module a border layer adjoins the openings and separates inner and outer area from one another. Expediently, the border layer is comprised of filter material and has a thickness in the radial direction which matches at least the effective filter thickness of a filter layer in the axial direction. No additional materials are required as a result of the embodiment of the border layer made from filter material. By means of a corresponding thickness of the border layer it is ensured that it does not constitute a bypass.

For the fixation of the material wound to a filter module, the inner and/or outer layers of the roll are expediently glued and/or welded. Alternatively, or in addition thereto, the filter module can be held together by clamping or supporting means. As a further embodiment it is provided that the filter module for increasing the stability is wound onto a support pipe.

For increasing the stability it is advantageous to wind a support material into the filter module wherein, in particular, for depth filter materials, it is expedient, for the purpose of compressing the filter material in the direction of the filtrate side and for increasing the filtration resolution, to wind into the filter module straps with at least partially wedge-shaped cross-section which are arranged alongside the slots and which compress the filter material in a direction toward the slots. Preferably, the wedge-shaped straps are arranged along the slots open toward the inner area.

The filter material can be a nonwoven, woven, screen, expanded metal, or mesh. Advantageously, sintered woven, sintered powder, foamed materials, filter layers, or depth filter layers can be employed.

The method for manufacturing a filter module of filter material provides that openings, in particular, slots, are produced in the filter material in the longitudinal direction of the filter material and that the filter material is wound about a winding axis. In this way, the filter module can be produced simply and in an automated fashion. Winding of the filter material, in comparison to stacking individual filter material layers, constitutes a substantially faster process. The openings of wound layers positioned atop one another form channels which are sealed radially toward the inner area or outer area of the roll.

It is provided that the filter material is in the form of a web and the slots are introduced by means of wedge-shaped knives which widen the slots and compress the adjacent filter material. Because of the widening of the slots, no waste is produced in the manufacture of the filter material. By means of the slot width the degree of compression and thus the filtration resolution can be adjusted in the case of depth filter material.

Expediently, the knives are arranged on a roller. The filter module can be produced continuously when a station in which the slots are produced is arranged upstream of a winding station. In particular, the openings, particularly the slots, are realized by jet cutting. Expediently, the openings, particularly, slots, are cut out. When cutting out the openings, no compressed areas are produced in the border zones of the openings. This can be advantageous when a homogenous filter material is desired across the filter material thickness.

Expediently, the filter module is glued together wherein the adhesive is, in particular, a resin which is also contained in the filter material. In this way, the introduction of an additional material is avoided so that the filter module is comprised exclusively of substances which are already contained in the filter material.

As an alternative measure, the filter module can also be welded.

However, it can also be taken into consideration to employ, instead of gluing or welding or in addition thereto, clamping means are arranged around the filter module.

Also, winding of the filter module with compression may be advantageous.

For increasing the stability, it can be provided that the filter module is wound onto a support pipe. For stabilization purposes, it is particularly provided that support material is wound into the filter module. By winding additional support material into the filter module, the stability of the filter module can be adjusted according to the requirements.

Expediently, straps with at least partially wedge-shaped cross section are wound into the filter module and positioned alongside the slots, and thus compress the filter material in the direction toward to the slots. In particular, the wedge-shaped straps are arranged along slots open toward the inner area.

Examples of the invention will be explained in the following by means of the drawing. It is shown in:
Fig. 1 a perspective view onto a depth filter module with depth filter material shown in section;
Fig. 2 half a section of a depth filter module;
Fig. 3 a plan view onto web-shaped depth filter material with slots arranged therein;

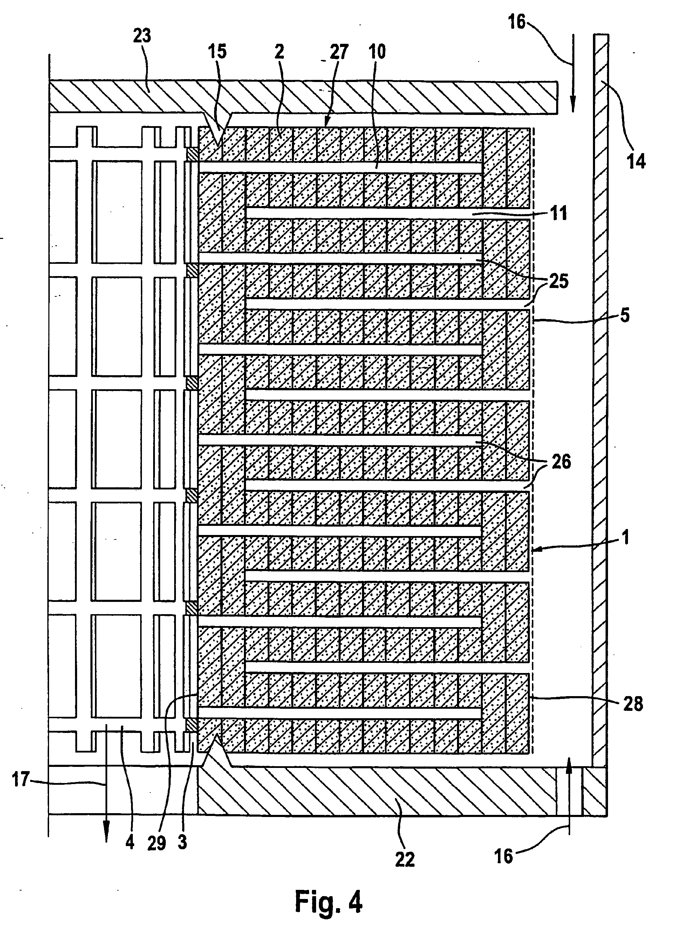

Fig. 4 a sectional illustration of the depth filter module of Fig. 1 in a filter housing;
Fig. 5 a perspective view of a wedge-shaped strap material;
Fig. 6 a sectional illustration of a portion of a depth filter module into which wedge-shaped strap material has been wound.

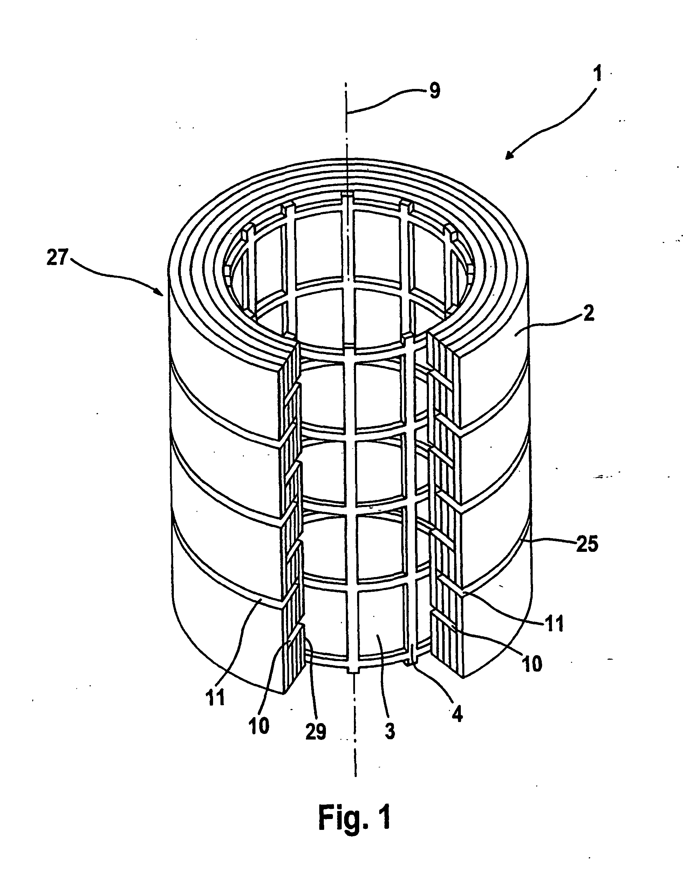

Fig. 1 shows an axially symmetrical depth filter module 1 which is comprised of depth filter material 2 wound about a winding axis 9. The wound depth filter material 2 forms a roll 27. The depth filter material 2 is wound about a support pipe 4 which is preferably made of a metal screen or plastic screen and serves for stabilizing the depth filter module 1 and which can assist in the winding step. The filter material 2 can be, for example, nonwoven, woven, screen, expanded metal, or mesh. It is also possible to employ sintered woven, sintered powder, foamed material, filter layers or depth filter layers. Within the support screen 4 a central channel 3 is formed. At the inner peripheral surface 29, the depth filter material 2 rests against the support screen 4. The depth filter material 2 has openings 25 which are embodied as slots 10, 11. Other shapes of the openings 25 can be advantageous.

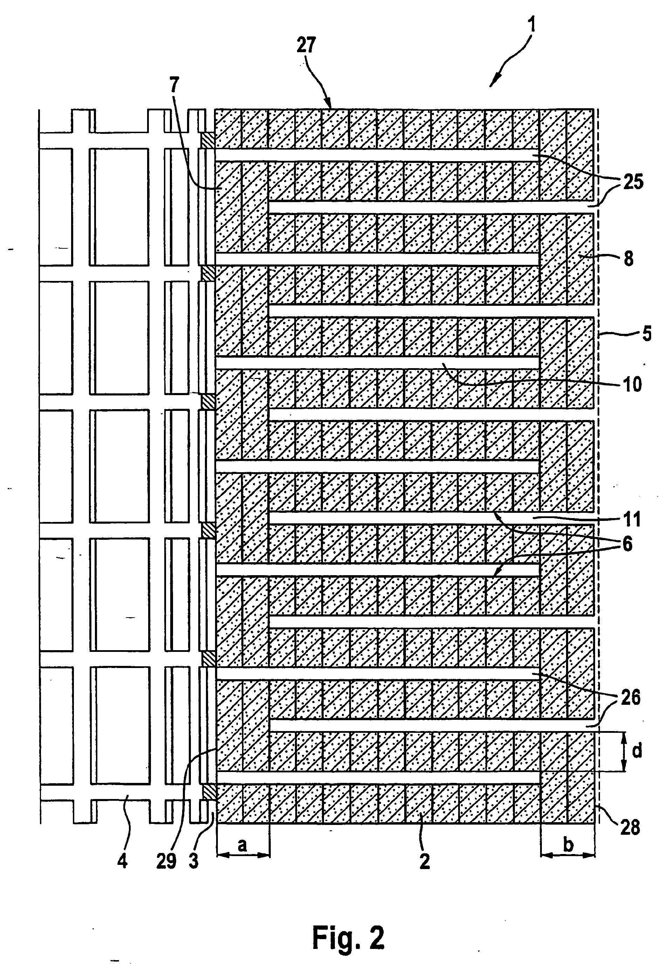

In Fig. 2, halt of a section view of the depth filter module 1 with the support pipe 4 and the depth filter material 2 wound about the support pipe 4 forming the roll 27 is illustrated. The central channel 3 arranged within the support pipe 4 forms together with the slots 10, which form channels 26 opening at the inner peripheral surface 29, the inner area of the depth filter module 1.

The outer area is separated from the inner area by depth filter material 2 and comprises the channels 26 opening at the outer peripheral surface 28 and formed by the slots 11.

A support screen 5 can be arranged on the outer peripheral surface 28 of the roll 27 which provides a clamping means that holds the roll 27 of depth filter material 2 together without closing off flow through the channels 26 opening at the outer peripheral surface 28. The boundary surfaces of the slots 10 and 11 form the flow-through surfaces 6 which are arranged perpendicularly to the surface of the depth filter material 2 delimiting the channels 26. The flow-through surfaces 6 extend disc-shaped about the central channel 3. The channels 26 however can be slanted relative to the winding axis 9 at angles smaller than 90°. In particular, angles between the winding axis and the channels of 30° to 90° are advantageous.

The thickness d of the depth filter material 2, through which the fluid to be filtered flows, corresponds to the spacing between the two slots 10 and 11 in the axial direction. For separating the slots 11 from the inner area and the slots 10 from the outer area, the border layer 7 at the inner peripheral surface 29 and the border layer 8 at the outer peripheral surface 28 of the depth filter module 1 are arranged. The border layers 7, 8 are comprised of depth filter material 2. The thickness a of the border layer 7 and the thickness b of the border layer 8 are at least as large as the thickness d of the depth material 2 through which flow is to be realized. It may be advantageous not to form the border layers 7, 8 of the depth filter material 2, but of a material impermeable to fluid which then seals the slots 10 outwardly and the slots 11 inwardly.

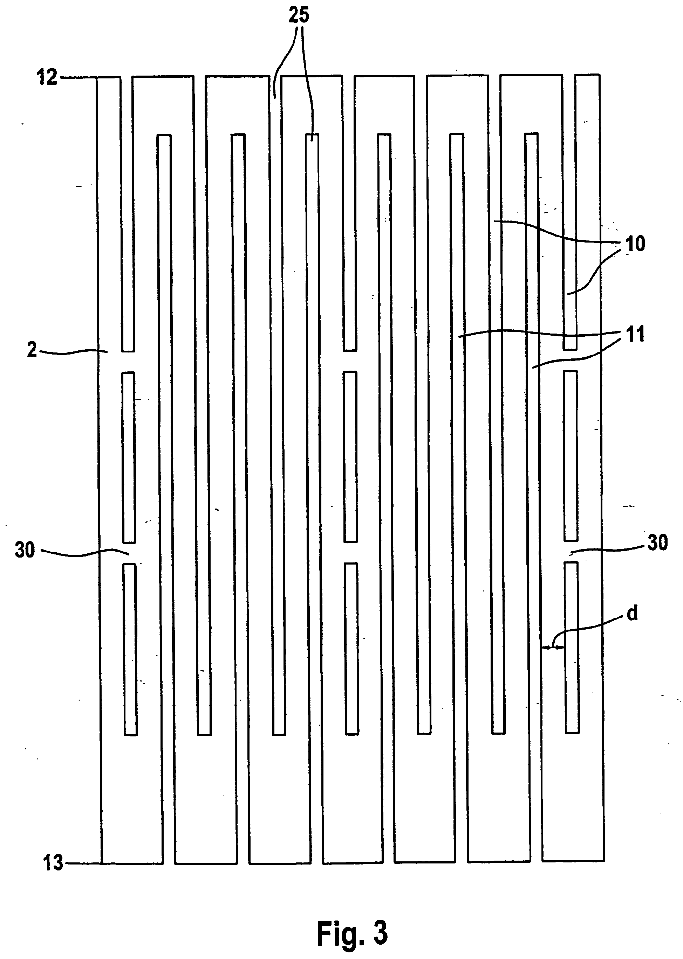

In Fig. 3, the depth filter material 2, with openings 25 arranged therein that are embodied as slots 10 and 11, is illustrated before winding the roll 27. The depth filter material 2 has a rectangular shape and the slots 10 and 11 extend in the longitudinal direction of the depth filter material 2. At the winding start 12, which is positioned on the central channel 3 for the winding step, the slots 10 that are oriented toward the inner area are open. The area between the winding start 12 and the beginning of the slots 11 forms the border area 7 of the depth filter material 2 after completion of winding. The slots 10 end before the winding end 13 wherein the area between the end of the slots 10 and the winding end 13 forms the border area 8. Three of the slots 10 are interrupted in the longitudinal direction by stays 30. It may be advantageous that a preponderant number or all slots 10, 11 are interrupted by stays 30. The transverse stays 30, which axe comprised of filter material, serve for increasing the stability of the wound depth filter module 1 and function as a winding aid.

The slots 10, 11 can be produced by a wedge-shaped knives which are arranged on a drum which extends in the transverse direction of the depth filter material 2. The slots 10, 11 are cut by the knives and, because of the wedge shape, are widened to the required slot width without this producing waste. Advantageously, the knives for the slots 10 and for the slots 11 are arranged on separate rollers so that the slot length can be adjusted independently from one another. The slots 10, 11 can also be cut out or produced by means of a jet cutting.

For producing a depth filter module 1, the slotted depth filter material 2 is wound beginning at the winding start 12. For increasing the stability, the depth filter material 2 can be wound onto a support pipe 4. Winding with pressing of the filter material may be advantageous. However, for a satisfactory stability of the depth filter material 2 it is expedient to wind the depth filter material 2 onto an auxiliary mandrel which is removed after the winding process is complete. For fixation of the roll 27 of the depth filter module 1, the depth filter material 2 can be glued together or welded. The fixation of the finish-wound depth filter material 2 by means of clamping means such a support screen 5 or clamping straps as well as a combination of these fixation possibilities can be advantageous.

The depth filter module 1, as illustrated in Pig. 4, can be arranged in a cylindrical filter housing 14. Sealing between the inner area and outer area at the filter housing 14 is realized by means of a circular sealing ring 15 formed on the bottom 22 and the lid 23 of the filter housing 14. The sealing ring 15 engages the depth filter material 2 and is pressed fixedly into it when the lid 23 is secured on the housing 14. This configuration does not require separate seals.

The unfiltered material flows in the direction of the arrows 16 into the filter housing 14 against the outer side of the depth filter module 1. From the channels 26, which open at the outer peripheral surface 28 and are formed by the slots 11, the unfiltered material flows via the depth filter material 2 of the thickness d into the channels 26 opening at the inner peripheral surface 29 and formed by the slots 10; flow takes place parallel to the surface of the depth filter material 2. The filtrate flows through the channels 26 formed by the slots 10 into the central channel 3 from where it exits the filter housing 14 in the direction indicated by arrow 17. The filter, however, can also be used in the inverse direction, i.e., counter to the direction of the arrows 16 and 17. A backwashing possibility is thus provided in principle.

For improving the filtration results, filtering aids can be added to the unfiltered material, such as diatomaceous earth. For increasing the filtration surface, several filter modules can be inserted into a filter housing 14, in particular, depth filter modules 1 which are stacked on top of one another and separated from another by plates; the plates are provided for sealing the filter modules relative to one another and for stabilization purposes.

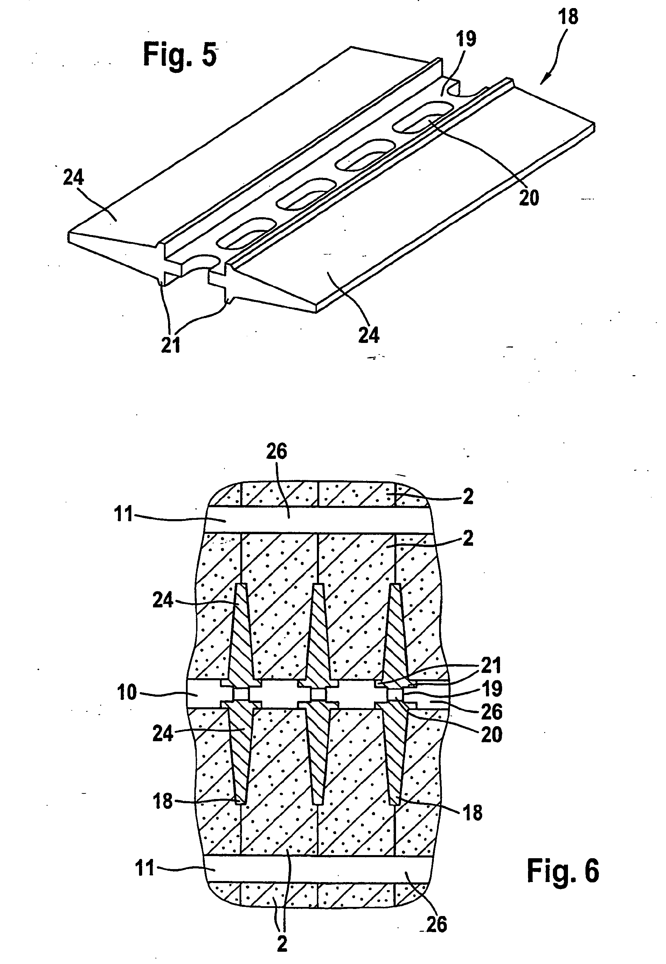

In Fig. 5, a wedge-shaped strap 18 is illustrated which serves for compressing the depth filter material 2 on the side of the filtrate. In this way, the filtration resolution is increased in the direction of filtration. The wedge-shaped strap 18 has two lateral wedges 24 which will come to rest between the wound layers of the depth filter material 2. In this way, the edges 21 form together with the slots 10 the channels 26 opening at the inner peripheral surface 29. The slot width corresponds to the width of a stay 19 which is arranged between the wedges 24 and the adjoining edges 21. The openings 20 in the stay 19 serve as passages for the filtrate.

In Fig. 6, a section of a depth filter module 1 is illustrated into which a wedge-shaped strap 18 has been wound. The edges 21 of the wedge-shaped strap 18 delimit a channel 26 formed by the slots 10 which in this case is arranged on the filtrate side. The wedge-shaped strap 18 has a stay 19 which is arranged perpendicularly to the flow direction in the slots 10. The wedges 24 compress the depth filter material 2 in the direction toward the channel 26. Because of the slant angle of the wedges 24, the increase of filtration resolution can be adjusted in the direction of the channel 26.

For increasing the stability of the depth filter module, instead of the wedge-shaped strap 18, or in addition thereto, straps of different materials can be wound into the roll which are positioned parallel to the flow direction between the individual layers of the depth filter material 2. Instead of the wedge-shaped strap 18 with the stay 19 it is also possible to be employ a wedge-shaped strap which has two or several stays between the wedges 24.

## Claims

1. A filter module, comprised of filter material, wherein openings (25) are formed In the filter material and the boundary surfaces of the openings (25) constitute flow-through surfaces (6), said filter material being a depth filter material (2),
wherein the filter module is a roll (27) of wound filter material, said filter module being wound with compression, wherein the openings (25) of the wound layers of the filter material are arranged to form channels (26) angled relative to the windings axis (9), of which one group opens at an outer peripheral surface (28) of the roll (27) and the other group at an inner peripheral surface (29) of the roll (27), wherein the channels (26) are closed at their other end, respectively, wherein the channels (26), angled relative to the winding axis (9), are separated from one another by filter material, and wherein the inner area of the roll (27) comprises a central channel (3) arranged around the winding axis (9).

2. The filter module according to claim 1, **characterized in that** the central channel (3) is cylindrical.

3. The filter module according to claim 1 or 2, **characterized in that** the openings (25) are formed as slots (10, 11).

4. The filter module according to claim 3, **characterized in that** the slots (10, 11) in the peripheral direction of the depth filter module are interrupted by stays (30).

5. The filter module according to one of the claims 1 to 4, **characterized in that** the flow-through surfaces (6) are arranged perpendicularly to the winding axis (9) in a disc shape around the winding axis.

6. The filter module according to one of the claims 1 to 4, **characterized in that** the channels (26) are slanted relative to the winding axis (9) at an angle smaller than 90°.

7. The filter module according to one of the claims 1 to 6, **characterized in that**, in the direction of the winding axis (9), channels (26) opening at the inner peripheral surface (29) and channels (26) opening at the outer peripheral surface (28) are arranged alternatingly.

8. The filter module according to claim 7, **characterized in that** in the radial direction of the filter module, a border layer (7, 8) adjoins the openings (25) and separates the inner area and the outer area from one another.

9. The filter module according to claim 8, **characterized in that** the border layer (7, 8) is comprised of filter material and has a thickness (a, b) in the radial direction which matches at least the effective filter thickness (d) of a filter layer in the axial direction.

10. The filter module according to one of the claims 1 to 9, **characterized in that** the filter module is glued together, the adhesive being preferably selected from a resin which is also present in the filter material.

11. The filter module according to one of the claims 1 to 10, **characterized in that** the filter module is welded together.

12. The filter module according to one of the claims 1 to 11, **characterized in that** the filter module is held together by clamping and supporting means.

13. The filter module according to one of the claims 1 to 12, **characterized in that** the filter module is wound onto a support pipe (4).

14. The filter module according to one of the claims 1 to 13, **characterized in that** support material is wound into the filter module.

15. The filter module according to one of the claims 1 to 14, **characterized in that** straps (18) having an at least partially wedge-shaped cross-section are wound into the filter module and are arranged alongside slots (10, 11) and compress the filter material in a direction toward the slots (10, 11).

16. The filter module according to claim 15, **characterized** the wedge-shaped straps (18) are arranged along slots (10) opening toward the inner area.

17. A method for manufacturing a filter module of filter material,
wherein openings (25) are introduced into the filter material in the longitudinal direction of the filter material said filter material being a depth filter material, wherein the filter material is wound about a winding axis (9)_such that the openings (25) of the sequentially arranged winding layers which are substantially aligned with one another and, in this way, channels (26) are formed which extend at an angle relative to the winding axis (9) within the filter module wound to a roll (27), wherein two groups of channels (26) are formed of which the channels (26) of one group are closed at their radially outer end and the channels of the other group are closed at the radially inner end, and wherein said filter module is wound with compression.

18. The method according to claim 17, **characterized in that** slots (10, 11) are introduced as the openings (25).

19. The method according to claim 18, **characterized in that** the filter material is present as a web and the slots (10, 11) are introduced by means of wedge-shaped knives which widen the slots (10, 11) and compress the adjoining filter material.

20. The method according to claim 19, **characterized in that** the knives are arranged on a roller.

21. The method according to claim 17 or 18, **characterized in that** the openings (25) are introduced by means of jet cutting.

22. The method according to claim 17 or 18, **characterized in that** the openings (25) are cut out.

23. The method according to one of claims 17 to 22, **characterized in that** the filter module is glued together.

24. The method according to claim 23, **characterized in that** a resin is used as an adhesive which resin is also contained in the filter material.

25. The method according to claim 17 to 24, **characterized in that** the filter module is welded together.

## Patentansprüche

1. Filtermodul, welches von einem Filtermaterial gebildet ist, wobei in dem Filtermaterial Öffnungen (25) ausgebildet sind und die Begrenzungsoberflächen der Öffnungen (25) Durchflussoberflächen (6) bilden, wobei das Filtermaterial ein Tiefenfiltermaterial (2) ist,
wobei das Filtermodul eine Rolle (27) von gewickeltem Filtermaterial ist, wobei das Filtermodul mit Kompression gewickelt ist, wobei die Öffnungen (25) der Wickellagen des Filtermaterials so angeordnet sind, dass sie Kanäle (26) bilden, die gegenüber der Wickelachse (9) einen Winkel definieren, von denen eine Gruppe an einer Außenumfangsoberfläche (28) der Rolle (27) mündet und die andere Gruppe an einer Innenumfangsoberfläche (29) der Rolle (27) mündet, wobei die Kanäle (26) an ihrem jeweiligen anderen Ende geschlossen sind, wobei die Kanäle (26), die gegenüber der Wickelachse (9) einen Winkel definieren, durch Filtermaterial voneinander getrennt sind, und wobei der Innenbereich der Rolle (27) einen zentralen Kanal (3) umfasst, welcher um die Wickelachse (9) herum angeordnet ist.

2. Filtermodul nach Anspruch 1, **dadurch gekennzeichnet, dass** der zentrale Kanal (3) zylindrisch ist.

3. Filtermodul nach Anspruch 1 oder 2, **dadurch gekennzeichnet, dass** die Öffnungen (25) als Schlitze (10, 11) ausgebildet sind.

4. Filtermodul nach Anspruch 3, **dadurch gekennzeichnet, dass** die Schlitze (10, 11) in Umfangsrichtung des Tiefenfiltermoduls von Stegen (30) unterbrochen sind.

5. Filtermodul nach einem der Ansprüche 1 bis 4, **dadurch gekennzeichnet, dass** die Durchflussoberflächen (6) senkrecht zu der Wickelachse (9) scheibenförmig um die Wickelachse herum angeordnet sind.

6. Filtermodul nach einem der Ansprüche 1 bis 4, **dadurch gekennzeichnet, dass** die Kanäle (26) gegenüber der Wickelachse (9) um einen Winkel kleiner 90° geneigt sind.

7. Filtermodul nach einem der Ansprüche 1 bis 6, **dadurch gekennzeichnet, dass** in Richtung der Wickelachse (9) abwechselnd an der Innenumfangsoberfläche (29) mündende Kanäle (26) und an der Außenumfangsoberfläche (28) mündende Kanälen (26) angeordnet sind.

8. Filtermodul nach Anspruch 7, **dadurch gekennzeichnet, dass** in radialer Richtung des Filtermoduls eine Randschicht (7, 8) an die Öffnungen (25) angrenzt und den Innenbereich und den Außenbereich voneinander trennt.

9. Filtermodul nach Anspruch 8, **dadurch gekennzeichnet, dass** die Randschicht (7, 8) von einem Filtermaterial gebildet ist und in radialer Richtung eine Dicke (a, b) aufweist, die mindestens der wirksamen Filterdicke (d) einer Filterlage in axialer Richtung entspricht.

10. Filtermodul nach einem der Ansprüche 1 bis 9, **dadurch gekennzeichnet, dass** das Filtermodul verklebt ist, wobei der Klebstoff vorzugsweise aus einem Harz ausgewählt ist, welches auch in dem Filtermaterial vorhanden ist.

11. Filtermodul nach einem der Ansprüche 1 bis 10, **dadurch gekennzeichnet, dass** das Filtermodul verschweißt ist.

12. Filtermodul nach einem der Ansprüche 1 bis 11, **dadurch gekennzeichnet, dass** das Filtermodul durch Spann- und Stützmittel zusammengehalten ist.

13. Filtermodul nach einem der Ansprüche 1 bis 12, **dadurch gekennzeichnet, dass** das Filtermodul auf ein Stützrohr (4) gewickelt ist.

14. Filtermodul nach einem der Ansprüche 1 bis 13, **dadurch gekennzeichnet, dass** in das Filtermodul Stützmaterial eingewickelt ist.

15. Filtermodul nach einem der Ansprüche 1 bis 14, **dadurch gekennzeichnet, dass** in das Filtermodul Bänder (18) mit einem mindestens teilweise keilförmigen Querschnitt eingewickelt und längs von Schlitzen (10, 11) angeordnet sind und das Filtermaterial in Richtung zu den Schlitzen (10, 11) hin komprimieren.

16. Filtermodul nach Anspruch 15, **dadurch gekennzeichnet, dass** die keilförmigen Bänder (18) entlang Schlitzen (10) angeordnet sind, welche zu dem Innenbereich hin münden.

17. Verfahren zur Herstellung eines Filtermoduls aus Filtermaterial,
wobei in das Filtermaterial Öffnungen (25) in Längsrichtung des Filtermaterials eingebracht werden, wobei das Filtermaterial ein Tiefenfiltermaterial ist, wobei das Filtermaterial um eine Wickelachse (9) gewickelt wird, derart, dass die Öffnungen (25) der aufeinanderfolgend angeordneten Wickellagen im Wesentlichen zueinander ausgerichtet sind und auf diese Weise Kanäle (26), die gegenüber der Wickelachse (9) einen Winkel definieren, gebildet werden, welche sich innerhalb des zu einer Rolle (27) gewickelten Filtermoduls erstrecken, wobei zwei Gruppen von Kanälen (26) gebildet werden, von denen die Kanäle (26) einer Gruppe an ihrem radial äußeren Ende geschlossen werden und die Kanäle der anderen Gruppe an dem radial inneren Ende geschlossen werden, und wobei das Filtermodul mit Kompression gewickelt wird.

18. Verfahren nach Anspruch 17, **dadurch gekennzeichnet, dass** als die Öffnungen (25) Schlitze eingebracht werden.

19. Verfahren nach Anspruch 18, **dadurch gekennzeichnet, dass** das Filtermaterial als eine Bahn vorliegt und dass die Schlitze (10, 11) mittels keilförmiger Messer eingebracht werden, welche die Schlitze (10, 11) aufweiten und das angrenzende Filtermaterial komprimieren.

20. Verfahren nach Anspruch 19, **dadurch gekennzeichnet, dass** die Messer an einer Walze angeordnet sind.

21. Verfahren nach Anspruch 17 oder 18, **dadurch gekennzeichnet, dass** die Öffnungen (25) mittels Strahlschneiden eingebracht werden.

22. Verfahren nach Anspruch 17 oder 18, **dadurch gekennzeichnet, dass** die Öffnungen (25) ausgeschnitten werden.

23. Verfahren nach einem der Ansprüche 17 bis 22, **dadurch gekennzeichnet, dass** das Filtermodul verklebt wird.

24. Verfahren nach Anspruch 23, **dadurch gekennzeichnet, dass** als Klebstoff ein Harz verwendet wird, welches auch in dem Filtermaterial enthalten ist.

25. Filtermodul nach Anspruch 17 bis 24, **dadurch gekennzeichnet, dass** das Filtermodul verschweißt wird.

## Revendications

1. Module de filtration, composé d'un matériau de filtration, dans lequel des ouvertures (25) sont formées dans le matériau de filtration et les surfaces qui limitent les ouvertures (25) constituent des surfaces de passage d'écoulement (6), ledit matériau de filtration étant un matériau de filtration épais (2),
dans lequel le module de filtration est un rouleau (27) de matériau de filtration enroulé, ledit module de filtration étant enroulé avec de la compression, dans lequel les ouvertures (25) des couches enroulées du matériau de filtration sont agencées pour former des canaux (26) inclinés par rapport à l'axe d'enroulement (9), dont un groupe s'ouvre au niveau d'une surface périphérique extérieure (28) du rouleau (27) et l'autre groupe au niveau d'une surface périphérique intérieure (29) du rouleau (27), dans lequel les canaux (26) sont fermés à leur autre extrémité, respectivement, dans lequel les canaux (26), inclinés par rapport à l'axe d'enroulement (9), sont séparés les uns des autres par du matériau de filtration, et dans lequel la surface intérieure du rouleau (27) comprend un canal central (3) agencé autour de l'axe d'enroulement (9).

2. Module de filtration selon la revendication 1, **caractérisé en ce que** le canal central (3) est cylindrique.

3. Module de filtration selon la revendication 1 ou 2, **caractérisé en ce que** les ouvertures (25) sont formées comme des fentes (10, 11).

4. Module de filtration selon la revendication 3, **caractérisé en ce que** les fentes (10, 11) dans la direction périphérique du module de filtration épais sont interrompus par des montants (30).

5. Module de filtration selon l'une quelconque des revendications 1 à 4, **caractérisé en ce que** les surfaces de passage d'écoulement (6) sont agencées perpendiculairement à l'axe d'enroulement (9) dans une forme de disque autour de l'axe d'enroulement.

6. Module de filtration selon l'une quelconque des revendications 1 à 4, **caractérisé en ce que** les canaux (26) sont inclinés par rapport à l'axe d'enroulement (9) à un angle plus petit que 90°.

7. Module de filtration selon l'une quelconque des revendications 1 à 6, **caractérisé en ce que**, dans la direction de l'axe d'enroulement (9), les canaux (26) ouvrant au niveau de la surface périphérique intérieure (29) et des canaux (26) ouvrant au niveau de la surface périphérique extérieure (28) sont agencés alternativement.

8. Module de filtration selon la revendication 7, **caractérisé en ce que** dans la direction radiale du module de filtration, une couche limite (7, 8) est voisine des ouvertures (25) et sépare la surface intérieure et la surface extérieure l'une de l'autre.

9. Module de filtration selon la revendication 8, **caractérisé en ce que** la couche limite (7, 8) est composée d'un matériau de filtration et a une épaisseur (a, b) dans la direction radiale qui correspond au moins à l'épaisseur de filtre réelle (d) d'une couche de filtre dans la direction axiale.

10. Module de filtration selon l'une quelconque des revendications 1 à 9, **caractérisé en ce que** le module de filtration est collé, l'adhésif étant de préférence sélectionné comme une résine qui est aussi présente dans le matériau de filtration.

11. Module de filtration selon l'une quelconque des revendications 1 à 10, **caractérisé en ce que** le module de filtration est soudé.

12. Module de filtration selon l'une quelconque des revendications 1 à 11, **caractérisé en ce que** le module de filtration est maintenu par des moyens de support et de serrage.

13. Module de filtration selon l'une quelconque des revendications 1 à 12, **caractérisé en ce que** le module de filtration est enroulé sur un tuyau de support (4).

14. Module de filtration selon l'une quelconque des revendications 1 à 13, **caractérisé en ce que** du matériau de support est enroulé dans le module de filtration.

15. Module de filtration selon l'une quelconque des revendications 1 à 14, **caractérisé en ce que** des attaches (18) ayant une section transversale au moins partiellement en forme de coin sont enroulés dans le module de filtration et sont agencés le long de fentes (10, 11) et compriment le matériau de filtration dans une direction vers les fentes (10, 11).

16. Module de filtration selon la revendication 15, **caractérisé en ce que** les attaches (18) en forme de coin sont agencés le long de fentes (10) ouvrant vers la surface intérieure.

17. Procédé de fabrication d'un module de filtration en matériau de filtration,
dans lequel des ouvertures (25) sont introduites dans le matériau de filtration dans la direction longitudinale du matériau de filtration ledit matériau de filtration étant un matériau de filtration épais, dans lequel le de matériau de filtration est enroulé autour d'un axe d'enroulement (9) de telle manière que les ouvertures (25) des couches d'enroulement agencées séquentiellement qui sont sensiblement alignées ensemble et, de cette manière, des canaux (26) sont formés qui s'étendent avec un angle par rapport à l'axe d'enroulement (9) dans le module de filtration enroulé sur un rouleau (27), dans lequel deux groupes de canaux (26) sont formés dont les canaux (26) d'un groupe sont fermés à leur extrémité radialement extérieure et les canaux de l'autre groupe sont fermés à leur extrémité radialement intérieure, et dans lequel ledit module de filtration est enroulé avec de la compression.

18. Procédé selon la revendication 17, **caractérisé en ce que** des fentes (10, 11) sont introduites comme les ouvertures (25).

19. Procédé selon la revendication 18, **caractérisé en ce que** le matériau de filtration est présent comme un film et les fentes (10, 11) sont introduites au moyen de lames en forme de coin qui élargissent les fentes (10, 11) et compriment le matériau de filtration voisin.

20. Procédé selon la revendication 19, **caractérisé en ce que** les lames sont agencées sur un rouleau.

21. Procédé selon la revendication 17 ou 18, **caractérisé en ce que** les ouvertures (25) ouvertures (25) sont introduites au moyen d'une découpe au jet.

22. Procédé selon la revendication 17 ou 18, **caractérisé en ce que** les ouvertures (25) sont découpées.

23. Procédé selon l'une quelconque des revendications 17 à 22, **caractérisé en ce que** le module de filtration est collé.

24. Procédé selon la revendication 23, **caractérisé en ce qu'**une résine est utilisée comme un adhésif laquelle résine est contenue dans le matériau de filtration.

25. Procédé selon la revendication 17 à 24, **caractérisé en ce que** le module de filtration est soudé.
